# EUROPEAN PATENT APPLICATION

(11) **EP 2 623 194 A1**
(43) Date of publication of application: **07.08.2013**
(21) Application number: 13152552.9
(22) Date of filing: 24.01.2013
(51) Int. Cl.: B01J 8/04, B01J 8/02, C01B 3/38

(54) **Heat exchange reformer with thermal expansion management**

(30) Priority: 01.02.2012 US 201213363760
(71) Applicant: Delphi Technologies, Inc., Troy, MI 48007 (US)
(72) Inventor: Fischer, Bernhard A., Honeoye Falls, NY 14472 (US)
(74) Representative: Allain, Michel Jean Camille

(57) **Abstract**

A catalytic reformer assembly comprises walls that define a first flow path for a first medium and a second flow path, fluidly isolated from the first flow path, for a second medium. The first flow path includes a central flow channel, a first annular flow channel radially surrounding the central flow channel, and a second annular flow channel radially surrounding the first annular flow channel. The second flow path comprises a third annular flow channel and a fourth annular flow channel each disposed radially between the first annular flow channel and the second annular flow channel.

## Description

### BACKGROUND OF THE INVENTION

The invention relates to a reformer assembly for generating hydrogencontaining reformate from hydrocarbons. In such an assembly, a feedstream comprising air and hydrocarbon fuel is converted by a catalyst into a hydrogen-rich reformate stream. In a typical reforming process, the hydrocarbon fuel is percolated with oxygen through a catalyst bed or beds contained within one or more reactor tubes mounted in a reformer vessel. The catalytic conversion process is typically carried out at elevated catalyst temperatures in the range of about 700°C to 1100°C.

In order to vaporize the fuel/air mixture in the feedstream, as well as to maintain the catalyst at the desired operating temperature, it may be desirable to add heat to the reformer. A heat exchanger may be used to extract heat from a heated medium such as a heated gas from a combustor, while maintaining fluid isolation between the heated medium and the feedstream/reformate flow through the catalytic reformer. The high temperature excursions experienced within the reformer result in large thermal expansions of the materials in the reformer, imparting stresses on components and joints in the reformer.

What is needed in the art is a compact reformer arrangement that provides sufficient heat transfer while minimizing thermally induced stresses in a hydrocarbon catalytic reformer.

### SUMMARY OF THE INVENTION

A catalytic reformer assembly comprises walls that define a first flow path for a first medium and a second flow path for a second medium. The first medium may be a hot fluid stream and the second medium may be a feedstream that is to be heated by heat transfer from the first medium. In an exemplary embodiment the first medium flow path includes a central flow channel configured to direct flow from a chamber in a first axial direction, a first annular flow channel radially surrounding the central flow channel and configured to direct flow from the exit of the central flow channel in a second axial direction opposite the first axial direction, and a second annular flow channel radially surrounding the first annular flow channel and configured to direct flow from the exit of the first annular flow channel in the first axial direction. The second medium flow path comprises a third annular flow channel and a fourth annular flow channel each disposed radially between the first annular flow channel and the second annular flow channel, with the third annular flow channel configured to direct flow in the second axial direction and the fourth annular flow channel configured to direct flow in the first axial direction. The first medium flow path is fluidly isolated from the second medium flow path within the catalytic reformer assembly. The catalytic reformer assembly may further comprise one or more bypass openings configured to allow a portion of the first medium to enter the first annular flow channel or the second annular flow channel without first flowing through the entire length of the central flow channel. It may also comprise a catalyst disposed in the third annular flow channel or the fourth annular flow channel. In this later case, the catalyst is disposed on the surface of a porous substrate.

In an embodiment of the invention, a catalytic reformer assembly comprises a tubular inner combustor wall disposed about a longitudinal axis, a tubular outer combustor wall coaxial with the inner combustor wall, and an annular combustor partition extending from the outer surface of the inner combustor wall to the inner surface of the outer combustor wall. The inner combustor wall has a first end that is proximate the combustor partition and a second end that is axially remote from the combustor partition. The reformer assembly further comprises a tubular inner reactor wall disposed about the axis, a tubular outer reactor wall coaxial with the inner reactor wall and disposed radially outward of the inner reactor wall, a first reactor endcap portion disposed to fluidtightly close off a first end of the inner reactor wall, and an annular second reactor endcap portion disposed to fluidtightly couple the inner reactor wall to the outer reactor wall at a second end of the inner reactor wall opposite the first end of the inner reactor wall. The reformer assembly further comprises a tubular feedstream delivery unit (FDU) wall disposed about the axis and an FDU endcap portion disposed to fluidtightly close off a first end of the FDU wall. In the combustor assembly the inner reactor wall and the outer reactor wall are disposed radially between the inner combustor wall and the outer combustor wall, and the FDU wall is disposed radially between the inner reactor wall and the outer reactor wall.

In a further aspect of the invention, the temperature distribution and flow restriction in the heated medium flow path may be modified by including one or more flow bypass features in the elements that define the heated medium flow path. The catalytic reformer assembly may further comprise one or more bypass openings defined in the inner combustor wall or in the annular combustor partition and, a catalyst may be disposed between the inner reactor wall and the outer reactor wall on the surface of a porous substrate. The invention is also about a catalytic reformer assembly having a longitudinal axis and comprising a tubular inner combustor wall disposed about the axis, a tubular outer combustor wall coaxial with the inner combustor wall and disposed radially outward of the inner combustor wall to define a gap there between. An annular combustor partition extends from the outer surface of the inner combustor wall to the inner surface of the outer combustor wall. A tubular inner reactor wall is disposed about the axis, and a tubular outer reactor wall coaxial with the inner reactor wall and disposed radially outward of the inner reactor wall. A first reactor endcap portion is disposed to fluidtightly close off a first end of the inner reactor wall, an annular second reactor endcap portion is disposed to fluidtightly couple the inner reactor wall to the outer reactor wall at a second end of the inner reactor wall opposite the first end of the inner reactor wall.

A tubular feedstream delivery unit (FDU) wall is disposed about the axis and an FDU endcap portion is disposed to fluidtightly close off a first end of the FDU wall.

The inner reactor wall and the outer reactor wall are disposed radially between the inner combustor wall and the outer combustor wall. The FDU wall is disposed radially between the inner reactor wall and the outer reactor wall.

Also, the catalytic reformer assembly further comprises one or more bypass openings defined in the inner combustor wall or in the annular combustor partition and, a catalyst is disposed between the inner reactor wall and the outer reactor wall. Furthermore, the catalyst is disposed on the surface of a porous substrate.

### BRIEF DESCRIPTION OF THE DRAWINGS

The present invention will now be described, by way of example, with reference to the accompanying drawings, in which:

Fig. 1 is a schematic longitudinal cross-sectional view of a first embodiment of a catalytic hydrocarbon reformer assembly in accordance with the invention;

Fig. 2 is an exploded view of the first embodiment of a catalytic hydrocarbon reformer assembly in accordance with the invention;

Fig. 3 is an exploded view of a first component of the first embodiment of a catalytic hydrocarbon reformer assembly in accordance with the invention;

Fig. 4 is an exploded view of a second component of the first embodiment of a catalytic hydrocarbon reformer assembly in accordance with the invention;

Fig. 5 is an exploded view of a third component of the first embodiment of a catalytic hydrocarbon reformer assembly in accordance with the invention;

Fig. 6 is a schematic longitudinal cross-sectional view of an alternate embodiment of a catalytic hydrocarbon reformer assembly in accordance with the invention; and

Fig. 7 is an exploded view of a component of the alternate embodiment of a catalytic hydrocarbon reformer assembly in accordance with the invention.

### DESCRIPTION OF THE PREFERRED EMBODIMENTS

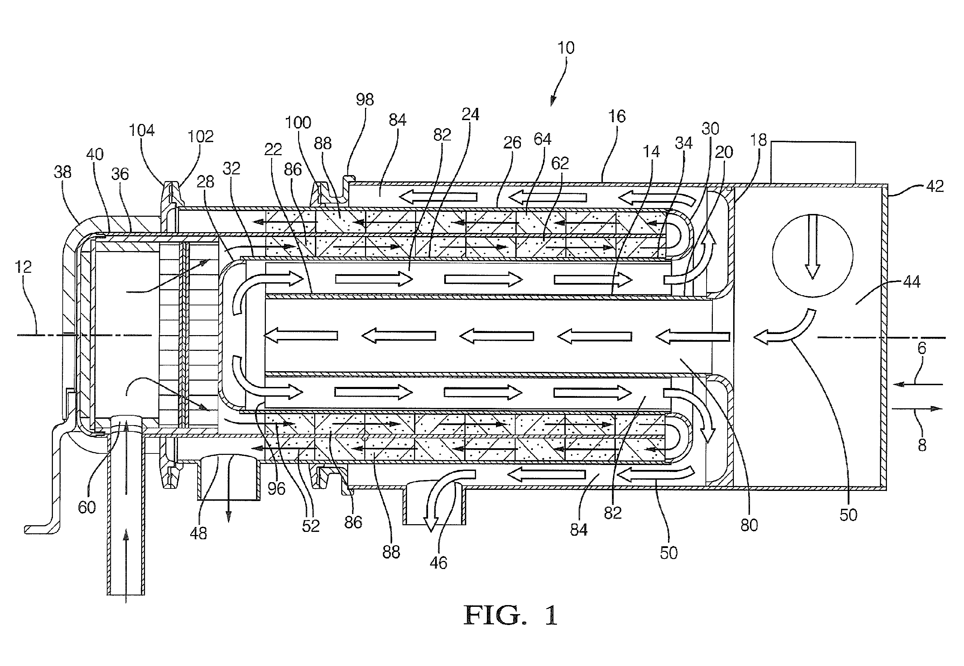

Referring to Fig. 1, a catalytic reformer assembly 10 having a longitudinal axis 12 comprises walls that define a first flow path 50 indicated by open arrows for a first medium, and a second flow path 52 indicated by solid arrows for a second medium. The first medium may be a hot fluid stream and the second medium may be a feedstream that is to be heated by heat transfer from the first medium. The first medium flow path 50 includes a central flow channel 80 configured to direct flow in a first axial direction 6. The first medium flow path 50 further includes a first annular flow channel 82 radially surrounding at least a portion of the central flow channel 80 and configured to direct flow from the exit of the central flow channel 80 in a second axial direction 8 opposite the first axial direction 6. The first medium flow path 50 further includes a second annular flow channel 84 radially surrounding at least a portion of the first annular flow channel 82 and configured to direct flow from the exit of the first annular flow channel 82 in the first axial direction 6.

Still referring to Fig. 1, the second medium flow path 52 comprises a third annular flow channel 86 and a fourth annular flow channel 88 each disposed radially between the first annular flow channel 82 and the second annular flow channel 84, with the third annular flow channel 86 configured to direct flow in the second axial direction 8 and the fourth annular flow channel 88 configured to direct flow in the first axial direction 6. The first medium flow path 50 is fluidly isolated from the second medium flow path 52 within the catalytic reformer assembly 10.

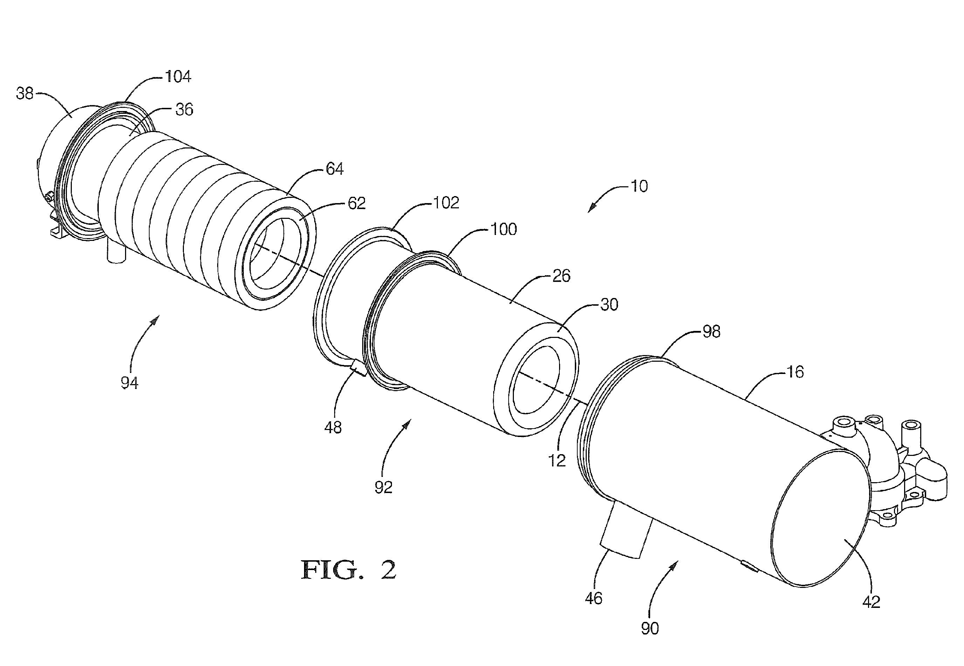

In an exemplary embodiment of the invention, the reformer assembly 10 may comprise subassemblies as shown in Fig. 2. These subassemblies may include a combustor assembly 90, a reactor assembly 92, and a feedstream delivery unit (FDU) assembly 94. The construction and interaction of the combustor assembly 90, reactor assembly 92, and FDU assembly 94 will be described in detail in the paragraphs that follow.

Referring to Fig. 1, Fig. 2, and Fig. 3, the exemplary combustor assembly 90 preferably has a generally cylindrical form and includes a tubular inner combustor wall 14 and a tubular outer combustor wall 16, each disposed about the axis 12. The reformer 10 also includes an annular combustor partition 18 located at a first end 20 of the inner combustor wall 14 and extending from the outer surface of the inner combustor wall 14 to the inner surface of the outer combustor wall 16. A combustor endcap 42 closes off an end of the outer combustor wall 16 such that a combustor chamber 44 is defined within the outer combustor wall 16 between the combustor endcap 42 and the combustor partition 18. A combustor output port 46 is defined by an opening in the outer combustor wall 16. The exemplary combustor assembly 90 also includes a combustor-to-reactor flange 98 disposed on the exterior surface of the outer combustor wall 16. The inner combustor wall 14, the outer combustor wall 16, the annular combustor partition 18, the combustor endcap 42, and the combustor-to-reactor flange 98 are each preferably made of metal. It will be appreciated that features depicted as discrete elements comprising the combustor assembly 90, such as the inner combustor wall 14, the outer combustor wall 16, the annular combustor partition 18, the combustor endcap 42, and the combustor-to-reactor flange 98, may be further integrated with each other, or alternatively may be further divided into other combinations of components, without departing from the scope of the invention.

Referring to Fig. 1, Fig. 2, and Fig. 4, the exemplary reactor assembly 92 comprises a tubular inner reactor wall 24 disposed about the axis 12 and a tubular outer reactor wall 26 coaxial with the inner reactor wall 24. A first reactor endcap portion 28 closes off a first end 32 of the inner reactor wall 24, and an annular second reactor endcap portion 30 fluidtightly couples the inner reactor wall 24 to the outer reactor wall 26. A reactor output port 48 is defined by an opening in the outer reactor wall 26. The exemplary reactor assembly 92 also comprises a reactor-to-combustor flange 100 and a reactor-to-FDU flange 102, both of which are disposed on the exterior surface of the outer reactor wall 26. The inner reactor wall 24, the outer reactor wall 26, the first reactor endcap portion 28, the annular second reactor endcap portion 30, the reactor-to-combustor flange 100, and the reactor-to-FDU flange 102 are each preferably made of metal. It will be appreciated that features depicted as discrete elements comprising the reactor assembly 92, such as the inner reactor wall 24, the outer reactor wall 26, the first reactor endcap portion 28, the annular second reactor endcap portion 30, the reactor-to-combustor flange 100, and the reactor-to-FDU flange 102, may be further integrated with each other, or alternatively may be further divided into other combinations of components, without departing from the scope of the invention.

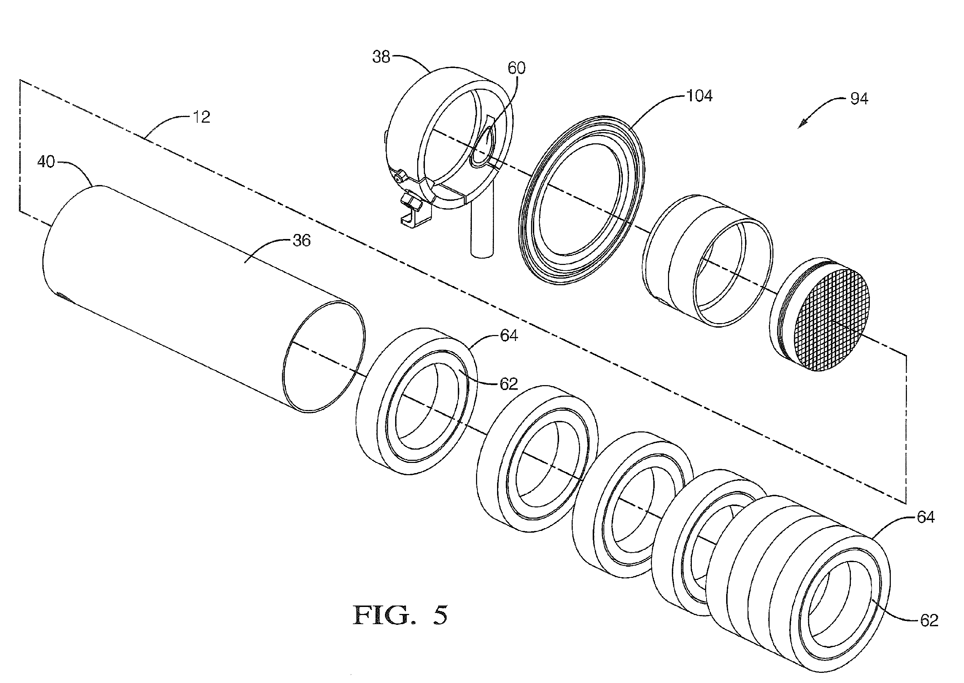

Referring to Fig. 1, Fig. 2, and Fig. 5, the feedstream delivery unit (FDU) assembly 94 comprises a tubular FDU wall 36 and an FDU endcap portion 38 that fluidtightly closes off a first end 40 of the FDU wall 36. An FDU inlet port 60 is defined by an opening in the FDU endcap portion 38 or in the FDU wall 36. FDU assembly 94 is shown bearing a plurality of inner catalyst portions 62 disposed within the FDU wall 36 and a plurality of outer catalyst portions 64 disposed along the exterior of FDU wall 36. Each inner catalyst portion 62 and outer catalyst portion 64 comprise a substrate having a catalyst disposed on its surface, the substrate having sufficient porosity to allow fluid flow therethrough. The exemplary FDU assembly 94 further comprises a FDU-to-reactor flange 104 disposed on the exterior surface of the FDU wall 36. The FDU wall 36, the FDU endcap portion 38, and the FDU-to-reactor flange 104 are each preferably made of metal. It will be appreciated that features depicted as discrete elements of the FDU, such as the FDU wall 36, the FDU endcap portion 38, and the FDU-to-reactor flange 104, may be further integrated with each other, or alternatively may be further divided into other combinations of components, without departing from the scope of the invention.

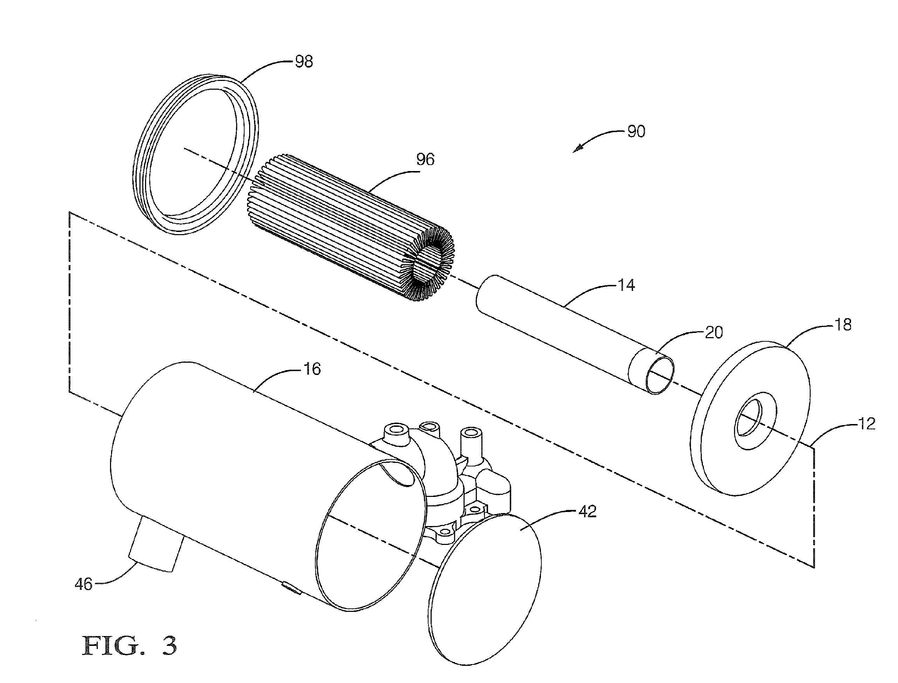

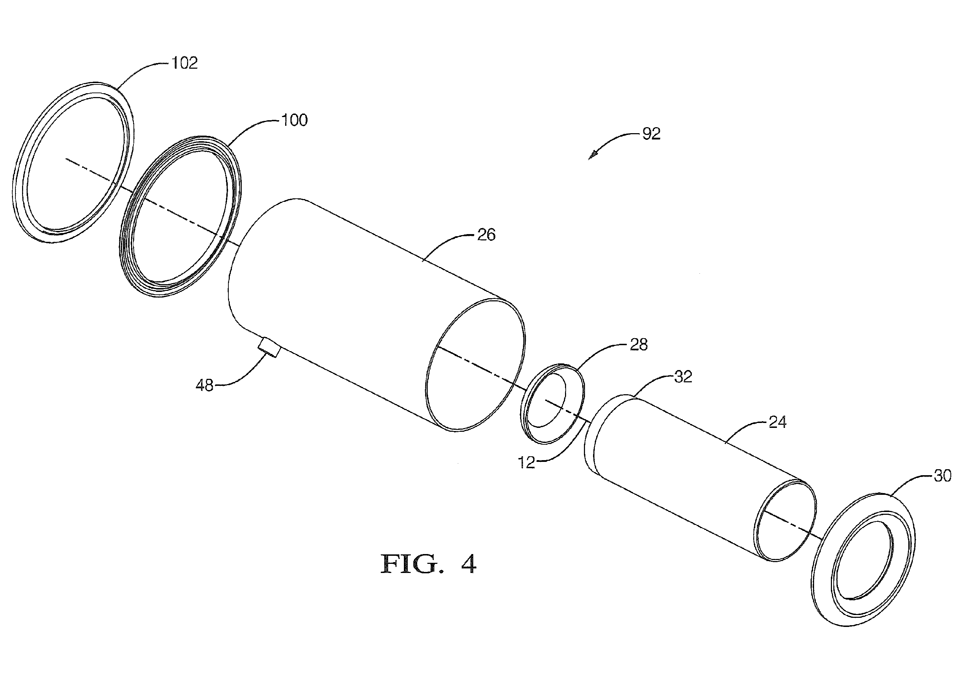

In an advantageous embodiment, components of the combustor assembly 90 as shown in Fig. 3 may be assembled to each other using a suitable joining technique such as brazing. Similarly, components of the reactor assembly 92 as shown in Fig. 4 may be assembled to one another using a suitable joining technique such as brazing. Components of the FDU assembly 94 may be likewise assembled to one another using a suitable joining technique such as brazing.

Referring to Fig. 1 and Fig. 2, the reformer assembly 10 may be assembled by axially inserting the combustor assembly 90 over the reactor assembly 92 until the combustor-to-reactor flange 98 is adjacent to the reactor-to-combustor flange 100, and inserting the FDU assembly 94 with inner catalyst portions 62 and outer catalyst portions 64 into the reactor assembly 92 until the FDU-to-reactor flange 104 is adjacent to the reactor-to-FDU flange 102. A suitable joining technique such as brazing may be used to sealingly attach the combustor-to-reactor flange 98 to the reactor-to-combustor flange 100, as well as to sealingly attach the reactor-to-FDU flange 102 to the FDU-to-reactor flange 104.

Operation of the exemplary reformer 10 shown in Fig. 1 through Fig. 5 will now be described. The reformer 10 defines two distinct flow paths that are kept isolated from each other. The first of these is a heated medium flow path, which is indicated by the heated medium flow path arrows 50. A heated medium may be generated by combusting a fuel in the combustor chamber 44, or alternatively a heated medium may be generated external to the reformer 10 and introduced into the chamber 44. The heated medium travels through the interior of the inner combustor wall 14 in a direction from the first end 20 of the inner combustor wall 14 toward the second end 22 of the inner combustor wall 14. Upon exiting the second end 22 of the inner combustor wall 14, the heated medium flows radially outwardly, reverses direction axially, and flows in the annular passage 82 defined between the inner combustor wall 14 and the inner reactor wall 24. In the vicinity of the combustor partition 18, the heated medium again flows radially outwardly, reverses direction axially, and flows in the annular passage 84 defined between the outer reactor wall 26 and the outer combustor wall 16 until reaching the combustor output port 46.

The second distinct flow path depicted in Fig. 1 is a reforming flow path, which is indicated by the reforming flow path arrows 52. A feedstream of chemical constituents to be catalytically reformed enters through the FDU inlet port 60. The feedstream may include air, fuel, and/or recycled gas from a solid oxide fuel cell. The feedstream flows in an axial direction from the first end 32 of the inner reactor wall 24 toward the second end 34 of the inner reactor wall 24, in the annular passage 86 defined between the inner reactor wall 24 and the FDU wall 36. An inner catalyst 62 may be disposed on a porous substrate in annular passage 88 defined between the inner reactor wall 24 and the FDU wall 36 such that the feedstream is percolated across the inner catalyst 62. In the vicinity of the second end 34 of the inner reactor wall 24, the feedstream flows radially outwardly, reverses direction axially, and flows in the annular passage defined between the FDU wall 36 and the outer reactor wall 26 until reaching the reactor output port 48. An outer catalyst 64 may be disposed on a porous substrate in the annular passage defined between the FDU wall 36 and the outer reactor wall 26 such that the feedstream is percolated across the outer catalyst 64. The reformed feedstream gas, alternatively referred to as reformate, is extracted from the reactor output port 48.

The inner reactor wall 24, the outer reactor wall 26, the first reactor endcap portion 28, and the annular second reactor endcap portion 30 are sealed to each other to provide hermetic isolation between the heated medium flow path 50 and the feedstream flow path 52. The inner reactor wall 24, the outer reactor wall 26, the first reactor endcap portion 28, and the annular second reactor endcap portion 30 are each preferably made from a thermally conductive material to facilitate heat transfer between the heated medium flow path 50 and the feedstream flow path 52.

In operation, a reformer assembly will be subjected to high temperature excursions as well as high differential temperatures within the assembly. As a result, differential thermal expansion of components within a reformer assembly may be considerable. The reformer assembly 10 shown in Fig. 1 through Fig. 5 minimizes thermally induced stresses by joining components to each other at one axial location. This allows differential axial growth of components to occur, such as due to different component temperatures or differences in temperature coefficient of expansion between component materials, without imparting axial stresses on the components. For example, the combustor assembly 90 is mechanically coupled to the reactor assembly 92 only at the interface between the combustor-to-reactor flange 98 and the reactor-to-combustor flange 100. The inner reactor wall 24 and the outer reactor wall 26 may grow and shrink axially relative to the outer combustor wall 16 and/or the inner combustor wall 14 without being constrained by the combustor components other than at the interface between the combustor-to-reactor flange 98 and the reactor-to-combustor flange 100. Similarly, the reactor assembly 92 is mechanically coupled to the FDU assembly 94 only at the interface between the reactor-to-FDU flange 102 and the FDU-to-reactor flange 104. The FDU wall 36 may grow and shrink axially relative to the inner reactor wall 24 and the outer reactor wall 26 without being constrained by the reactor components other than at the interface between the reactor-to-FDU flange 102 and the FDU-to-reactor flange 104.

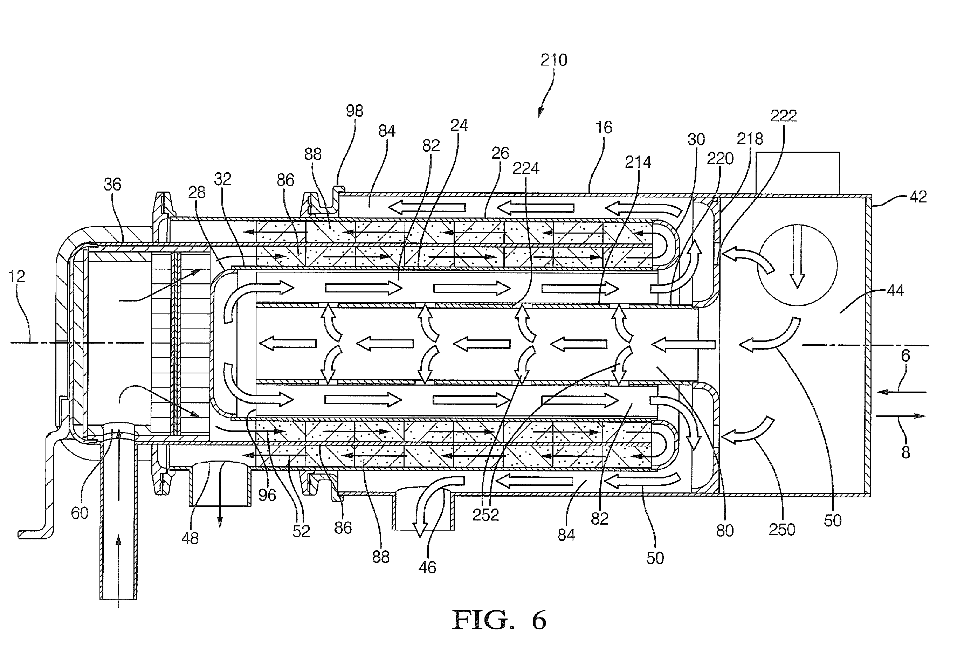

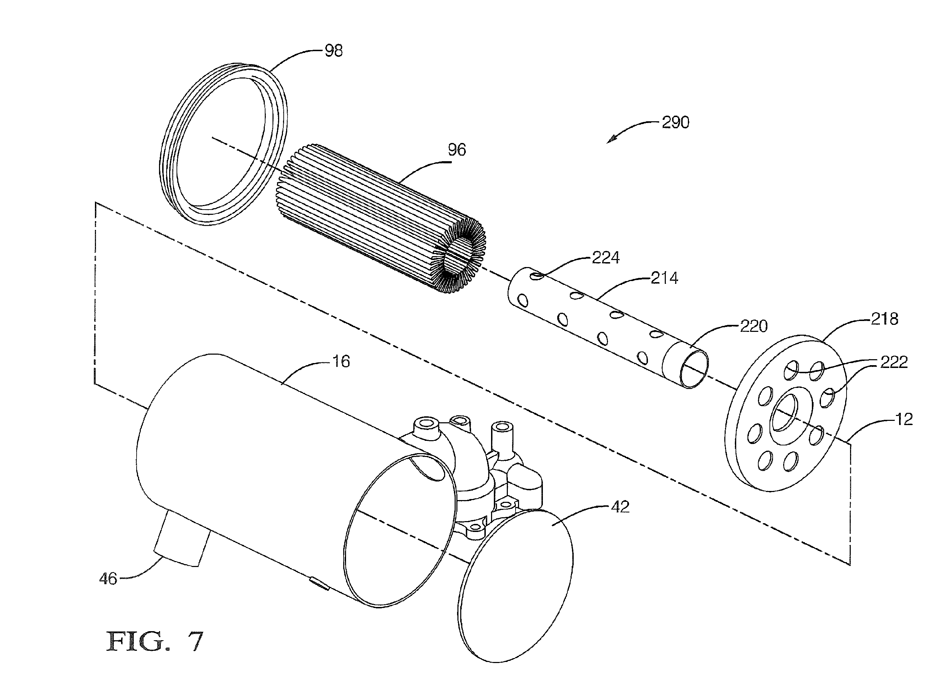

An alternate embodiment 210 of a catalytic reformer assembly is presented in Fig. 6 and Fig. 7. The embodiment 210 of Fig. 6 and Fig. 7 is similar to the embodiment 10 of Fig. 1 through Fig. 5, with like numbered elements being as described above in the descriptions of Fig. 1 through Fig. 5. The embodiment of Fig. 6 and Fig. 7 includes a combustor partition 218 that defines one or more bypass openings 222, in place of the combustor partition 18 in the embodiment of Fig. 1. The embodiment of Fig. 6 and Fig. 7 further includes an inner combustor wall 214 having a first end 220 where the inner combustor wall 214 defines one or more bypass openings 224, in place of the inner combustor wall 14 in the embodiment of Fig. 1.

Referring again to Fig. 1, it will be seen that in the embodiment 10 of Fig. 1 the heated medium will follow the entire heated medium flow path 50, namely all of the heated medium will flow the entire length of the inner combustor wall 14, the entire length of the annular flow channel defined between the inner combustor wall 14 and the inner reactor wall 24, and the entire length of the annular flow channel defined between the outer reactor wall 26 and the outer combustor wall 16. In contrast, referring to Fig. 6, the embodiment 210 of Fig. 6 includes bypass openings shown as openings 222 defined in the combustor partition 218 and openings 224 defined in the inner combustor wall 214. As shown in Fig. 6, a portion 252 of the heated medium flow may pass through an opening 224 in the inner combustor wall 214 and rejoin the heated medium flow path 50 without traveling the entire length of the inner combustor wall 214. Similarly, a portion 250 of the heated medium flow may pass through an opening 222 in the annular combustor partition 218 and rejoin the heated medium flow path 50 just before entering the annular flow channel defined between the outer reactor wall 26 and the outer combustor wall 16. Selection of the number, size, and locations of openings 222 and 224 can enable the temperature profile of the heated medium as a function of location in the heated medium flow path 50 to be tailored, for example to allow heated medium at a higher temperature to be present at locations further downstream in the heated medium flow path 50. It will also be appreciated that diverting a portion 250, 252 of the heated medium through openings 222, 224 can lower the flow restriction through the heated medium flow path while maintaining the overall size of the reformer assembly 210.

In order to improve heat transfer from the heated medium flow path 50 to the feedstream flow path 52, features may be included to augment the heat transfer coefficient between the flow paths 50, 52. For example, referring to Fig. 3 and Fig. 7, a heat exchange substrate 96 may be included on the exterior of the inner combustor wall 14 where the heat exchange substrate 96 will be exposed to the first annular flow channel 82, to promote heat transfer from the first annular flow channel 82 to the inner reactor wall 24. Other heat transfer augmentation features may be defined in or disposed on the inner reactor wall 24 and/or the outer reactor wall 26 which separate the heated medium flow path 50 from the feedstream flow path 52. Such heat transfer augmentation features may include foams, corrugations, dimples, and/or pedestals. It will be appreciated that incorporating such heat augmentation features comes at the cost of increased flow restriction and pressure loss in the heated medium flow path 50. Judicious combination of heat augmentation features in combination with the bypass openings 222, 224 discussed above may lead to a catalytic reformer assembly that is optimized for the requirements of a given application.

While this invention has been described in terms of the preferred embodiments thereof, it is not intended to be so limited, but rather only to the extent set forth in the claims that follow.

## Claims

1. A catalytic reformer assembly (10) having a longitudinal axis (12) and comprising walls that define a first flow path (50) for a first medium and a second flow path (52) for a second medium, said first flow path (50) comprising:
a central flow channel (80) configured to direct flow from a chamber in a first axial direction (6) toward an exit of the central flow channel (80),
a first annular flow channel (82) radially surrounding at least a portion of the central flow channel and configured to direct flow from the exit of the central flow channel (80) toward an exit of the first annular flow channel in a second axial direction (8) opposite the first axial direction (6),
a second annular flow channel (84) radially surrounding at least a portion of the first annular flow channel (82) and configured to direct flow from the exit of the first annular flow channel (82) in the first axial direction (6);
said second flow path (52) having an inlet and an outlet fluidly connected by a third annular flow channel (86) and a fourth annular flow channel (88), wherein the third annular flow channel (86) and the fourth annular flow channel (88) are each disposed radially between the first annular flow channel (82) and the second annular flow channel (84), the third annular flow channel (86) configured to direct flow in the second axial direction (8) and the fourth annular flow channel (88) configured to direct flow in the first axial direction (6);
wherein the first flow path (50) is fluidly isolated from the second flow path (52) within the catalytic reformer assembly (10).

2. The catalytic reformer assembly (10) of claim 1 further comprising one or more bypass openings configured to allow a portion of the first medium to enter the first annular flow channel (82) or the second annular flow channel (84) without first flowing through the entire length of the central flow channel (80).

3. A catalytic reformer assembly (10) as set in any of the preceding claim further comprising a catalyst disposed in the third annular flow channel (86) or the fourth annular flow channel (88).

4. A catalytic reformer assembly (10) of claim 3 wherein the catalyst is disposed on the surface of a porous substrate.

5. A catalytic reformer assembly (10) as set in claim 1 further comprising:
a combustor portion having an inner combustor wall (14) disposed about the axis (12), an outer combustor wall (16) coaxial with the inner combustor wall (14) and disposed radially outward of the inner combustor wall (14) to define a gap therebetween, and an annular combustor partition (18) extending from the outer surface of the inner combustor wall (14) to the inner surface of the outer combustor wall (16);
a reactor (92) portion having an inner reactor wall (24) disposed about the axis (12), an outer reactor wall (26) coaxial with the inner reactor wall (24) and disposed radially outward of the inner reactor wall, an first reactor endcap portion (28) disposed to fluidtightly close off a first end (20) of the inner reactor wall (14), an annular second reactor endcap portion (30) disposed to fluidtightly couple the inner reactor wall to the outer reactor wall at a second end (22) of the inner reactor wall opposite the first end (20) of the inner reactor wall;
a feedstream delivery unit (FDU) (94) portion having an FDU wall (36) disposed about the axis (12) and an FDU endcap portion (38) disposed to fluidtightly close off a first end (40) of the FDU wall;
wherein the combustor portion (90), the reactor portion (92), and the FDU portion (94) are disposed coaxially such that the inner reactor wall (24) and the outer reactor wall (26) are disposed radially between the inner combustor wall (14) and the outer combustor wall (16), and the FDU wall (36) is disposed radially between the inner reactor wall (24) and the outer reactor wall (26).

6. A catalytic reformer assembly (10) of claim 5 further comprising one or more bypass openings defined in the inner combustor wall (14) or in the annular combustor partition (18).

7. A catalytic reformer assembly (10) of claim 5 further comprising a catalyst disposed between the inner reactor wall (24) and the outer reactor wall (26).

8. A catalytic reformer assembly (10) of claim 7 wherein the catalyst is disposed on the surface of a porous substrate.

9. A catalytic reformer assembly (10) as set in claim 5 further comprising one or more bypass openings (218) defined in the inner combustor wall or in the annular combustor partition.

10. A catalytic reformer assembly (10) according to claim 9 further comprising a catalyst disposed between the inner reactor wall and the outer reactor wall.

11. A catalytic reformer assembly (10) of claim 10 wherein the catalyst is disposed on the surface of a porous substrate.
